# EUROPEAN PATENT SPECIFICATION

(11) **EP 0 729 878 B1**
(45) Date of publication and mention of the grant of the patent: **31.05.2000**
(21) Application number: 96103308.1
(22) Date of filing: 04.03.1996
(51) Int. Cl.: B62J 1/08, B62M 23/02

(54) **Seat fastening device for a bicycle**
Befestigungsvorrichtung für Fahrradsattel
Dispositif de fixation pour selle de bicyclette

(30) Priority: 03.03.1995 JP 4415695
(43) Date of publication of application: 04.09.1996
(73) Proprietor: YAMAHA HATSUDOKI KABUSHIKI KAISHA, Iwata-shi Shizuoka-ken, 438 (JP)
(72) Inventor: Enda, Ryuichi, Iwata-shi, Shizuoka-ken (JP)
(74) Representative: Grünecker, Kinkeldey, Stockmair & Schwanhäusser Anwaltssozietät

(56) References cited:
- EP-A- 0 712 779
- JP-A- 6 270 867
- US-A- 4 108 462
- US-A- 5 297 846

## Description

This invention relates to a seat fastening device for bicycles, in particular power-assisted bicycles, comprising a first bracket fastened to a seat post of said bicycle, a second bracket pivotably linked to said first bracket and supporting a seat of said bicycle and by means releasably connecting said first and second brackets.

In recent years, electric motor-assisted bicycles have been put to practical use, in which both human power drive system and electric motor drive system are employed to assist the human drive power with the electric motor drive power, as disclosed for example in the Japanese Unexamined Patent Publication Hei 2-74491. With the electric motor-assisted bicycle, the pedal force input from the pedals is detected and when the load on the rider increases the motor drive power is increased to alleviate the load on the rider.

Such an electric motor-assisted bicycle is provided with batteries mounted on the vehicle for driving the electric motor. Such batteries are mounted near the seat tube located in the middle of the vehicle not to imbalance the vehicle. Also the batteries are mounted usually behind the seat tube so as not to hinder the movement of legs of the rider when riding on and getting off, and during riding. In that case, the batteries are put into a box for protection against mud and dust from outside, and the box is secured behind the seat tube. However, it is also possible to secure the box in front of the seat tube, if behind the seat tube there is no space or the space is used for other purposes.

In addition, it is preferable that the batteries can be taken out from and replaced again into the box secured to the vehicle body for charging, repairing, etc. For that purpose, it will be convenient if the batteries can be drawn up from the box and inserted back into the box. However, a seat (saddle) of the bicycle is located on the top of the seat tube to which the box is secured. Therefore, if the seat remains in the position for riding, the seat stands in the way of vertical movement of the batteries and the batteries cannot be drawn up or inserted back.

Therefore, a proposal has been made as described in the Japanese Unexamined Patent Publication Hei 6-270867 in which the seat post is folded or the seat post together with the seat is removed to open up the space above the box. However, when the seat post is made to be foldable, the folding position becomes considerably low on the seat post so as to avoid the seat height adjustment range. As a result, the seat post has to be drawn out from the seat tube for the corresponding length, which is cumbersome. Furthermore, folding and removal of the seat tube involves loosening and tightening of screws, which is not necessarily easy.

Moreover, document US-A-4,108,462 discloses a bicycle seat mounting device as indicated above. This seat mounting device comprises a mounting bracket adapted to be secured to a bicycle seat, a connector secured to the bracket for linear movement relative thereto, means for releasably securing the connector to the bracket in a selected relative position, a clamp means adapted to clampingly engage a bicycle post, said clamp means being pivotally carried by the connector, and a common means for securing the clamp means in a selected pivotal relation to the connector and for actuating the clamp means, said bracket being a channel member comprised of a web connecting a pair of flanges, said flanges having a pair of elongated slots therein, said connector being slidably and guidingly received between the flanges of the bracket, with said means for releasably securing the connector to the bracket comprising threaded means engaging the connector and extending through the slots.

However, this mounting device is rather complicated, not easy to handle and, especially due to the long slots, not always reliably operable.

Accordingly, it is an objective of the present invention to provide an improved seat fastening device for bicycles, in particular power-assisted bicycles, which always ensures a reliable attachment and simultaneously is easily releasable to facilitate the access to compartments secured to the seat post of the bicycle.

According to the invention, this objective is solved for a seat fastening device as indicated above in that said first bracket comprises a bottom portion fixed to said seat post and two side walls extending from said bottom portion to said seat, an engagement pin arranged between both side walls adjacent said bottom portion or an engagement hole is provided on said first bracket and that said second bracket is attached with respect to the driving direction to one terminal end of said side walls by a rotary shaft.

In order to ease the handling of said seat fastening device, it is advantageous when said means comprises a lever provided with a hook pivotably linked to said second bracket and an engagement pin or hole provided on said first bracket.

The handling as well as a reliable fastening is further enhancable when said lever is arranged and constructed such that it is capable of engaging said engagement pin by a rotary movement effectable by the weight of said lever. This movement may be further effected by a coil spring fastened between said first bracket and said lever.

According to another embodiment of the invention, said lever is generally L-shaped and pivotably fastened to said second bracket by a rotary shaft protruding through a knee of said lever, whereby said lever further comprises a first arm portion substantially extending in longitudinal direction of said seat, whereby the free end of said first arm portion being provided with a grip and the second arm portion transversely extending to said first arm portion opposite said seat, whereby the free end of said second arm portion being provided with said hook.

A very easy release operation is obtainable when the sense of rotation for releasing said hook and said engagement pin corresponds to the sense of rotation of said second bracket with respect to said first bracket when said hook and said engagement pin are disengaged.

Further, it is advantageous when said second bracket comprises a bottom portion, one terminal end of which being formed in an arcuate shape coaxially with said rotary shaft and two side walls extending from said bottom portion to said seat.

According to still another embodiment of the invention, the seat fastening device comprises projections formed at terminal ends of said side walls adjacent said rotary shaft of said second bracket for limiting the rotary movement of said second bracket with respect to said first bracket.In addition, it is advantageous when said second bracket is maintainable in an opened position, when said hook and said engagement pin are disengaged by the force applied by said coil spring.

In order to prevent a user being injured if he unintentionally puts his hands between the opened brackets, it is advantageous when the heights of said side walls are such that portions of which are always adjacent said side walls of said second bracket regardless of the position of said second bracket with respect to said first bracket.

According to still another embodiment of the invention, said seat fastening device is characterized in that said bicycle is an electric motor-assisted bicycle comprising a cover over a main tube, said cover comprising an upper cover and a lower cover, said upper cover covering said main tube, a lower portion of a seat tube and a lower portion of an outer box in which at least one battery carrying inner box is insertable, while the lower cover covers an electric motor and a casing of a controller, whereby said outer box is fastened in front of said seat tube or between said seat tube and a rear wheel of said bicycle and is provided with a lid at its top end.

Other preferred embodiments of the present invention are laid down in further dependent claims.

With the releasable seat fastening device for bicycles according to one embodiment, the lever attached for turning to the second bracket is turned to disengage the hook of the lever from the engagement pin provided on the first bracket, and the second bracket is turned in the direction away from the first bracket. As a result, the seat attached to the second bracket can be easily turned.

By turning the second bracket toward the first bracket to engage the hook of the lever with the engagement pin, the second bracket is held immovable so that the rider can sit on the seat in that state. Here, the engagement pin provided on the first bracket fits in the recess formed on the second bracket so that the second bracket is immovable relative to the first bracket. As a result, the seat is prevented from rattling back and forth.

With the releasable seat fastening device for bicycles according to another embodiment, since the lever is arranged to be turned by its own weight in the direction of engaging the hook with the engagement pin, once the hook engages with the engagement pin, the pin cannot disengage naturally from the hook. Therefore, the hook need not be urged toward the direction of engagement with the engagement pin so that the urging spring can be omitted. Even when the urging spring is employed and the spring breaks in a rare case, the state of the hook in engagement with the engagement pin is maintained.

With the releasable seat fastening device for bicycles according to a further embodiment, since the direction of turning the lever for disengaging the hook from the engagement pin is the same as the direction of turning the second bracket away from the first bracket, the action of disengaging the hook from the engagement pin and the action of turning the second bracket away from the first bracket are made continuously and smoothly.

With the releasable seat fastening device for bicycles according to still a further embodiment, the second bracket is urged in the direction of turning the second bracket away from the first bracket by the spring for urging the hook in the direction of engagement with the engagement pin. Therefore, the seat which is once turned in the direction away from the first bracket may be held in the position to which it has been turned without employing a special holding mechanism. As a result, inconvenience such as the user doing some work near the seat tube being hit by the second bracket as it turns unexpectedly toward the first bracket is avoided.

With the releasable seat fastening device for bicycles according to still another embodiment, since the side walls of the first bracket are formed with a height not lower than a limit height to which the second bracket is turned away from the first bracket, user's hand is protected against being pinched between the second bracket and the first bracket.

With the releasable seat fastening device for bicycles according to another embodiment, since the cover is provided to cover the weld bead, the weld bead does not wedge into the top end brim of the seat tube even when the seat post is inserted into the seat tube to the deepest position. As a result, the top end brim of the seat tube is protected from damages and corrosion resulting from the damages is prevented.

With the releasable seat fastening device for bicycles according to still another embodiment, since the space between the side portions of the first bracket and the side portions of the second bracket is closed by closure means which can be extended and contracted, the rider's hand is reliably protected against being pinched between the second bracket and the first bracket.

In the following, the present invention is explained in greater detail with respect to several embodiments thereof in conjunction with the accompanying drawings, wherein:
Figure 1 is a side view of an electric motor-assisted bicycle provided with a seat turning device for bicycles as an embodiment;
Figure 2 is a side view of the electric motor-assisted bicycle with covers attached;
Figure 3 shows a side cross section of a bicycle seat fastening device of the embodiment, as seen along the arrow line III-III in figure 4;
Figure 4 shows a cross-section as seen along the arrow line IV-IV in figure 3;
Figure 5 shows a side cross-section in the state of the seat turned up;
Figure 6 is an enlarged side view of the lever for the fastening device; and
Figure 7 is a side view of an example modification of the embodiment.

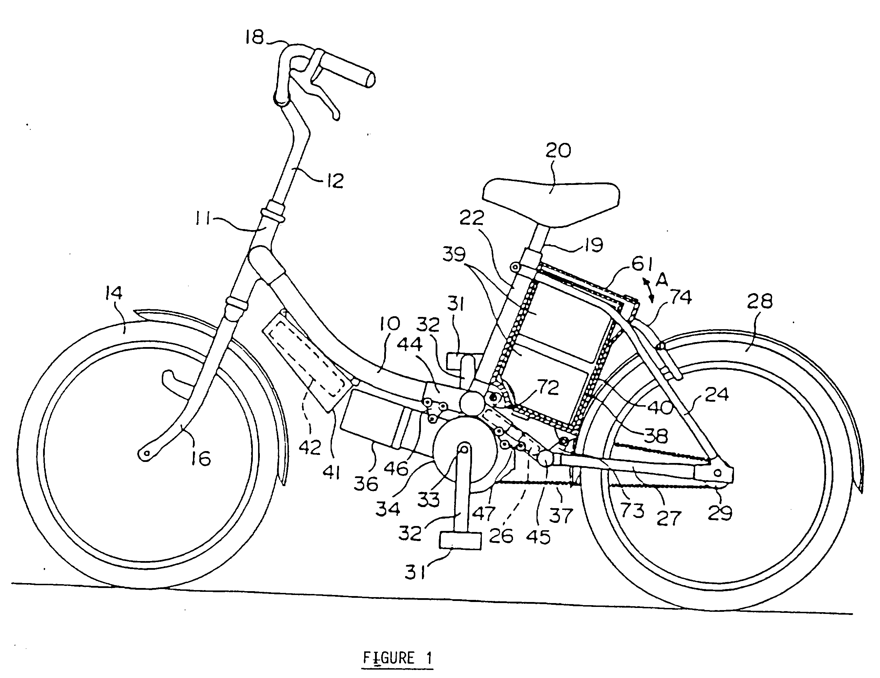

An embodiment of this invention will be hereinafter described in reference to the appended drawings. FIG. 1 is a side view of an electric motor-assisted bicycle provided with a seat turning device for bicycles as an embodiment of this invention. FIG. 1 shows the following components: A main tube 10 with its front end secured to a head tube 11 . A handlebar stem 12 is inserted in the head tube 11 so as to be rotatable about the axis of the head tube 11 . A right and left pair of forks 16 is secured to the lower portion of the handlebar stem 12 . A front wheel 14 is rotatably attached to the front forks 16 . Handlebars 18 extending in right and left directions are secured to the upper portion of the handlebar stem 12 .

The main tube 10 extends from the front obliquely down backward and to its rear end is secured a middle lug 44 to which are secured a seat tube 22 and a rear tube 26 . The seat tube 22 supports a seat post 19 to which is secured a seat 20 . To the rear tube 26 is secured a pair of chain stays 27 through a hanger lug 45 . The chain stays 27 and the seat tube 22 are connected to each other through a pair of seat stays 24 . As shown, the seat tube 22 , the seat stays 24 , the rear tube 26 and the chain stays 27 constitute a generally triangular shape in side view so as to support the weight of the rider when the rider rides on the bicycle. To the connecting portions of the seat stays 24 and the chain stays 27 is rotatably attached a rear wheel 28 .

A power unit 34 is attached to a position below the middle lug 44 and the hanger lug 45 through brackets 46 and 47 . The power unit 34 is made up of a human power drive system, an electric motor drive system, and a resultant force mechanism for combining the power of both systems. To the case of the power unit 34 is attached a crankshaft 33 to the ends of which cranks 32 are fixed. A pedal 31 is attached to each of the cranks 32 . The symbol 36 denotes an electric motor.

Rotation of the crankshaft 33 when the user depresses the pedals 31 is transmitted through one mechanism in the power unit 34 to the chain 37 and further to the rear wheel 28 through a freewheel 29 . By the rotation of the rear wheel 28 , the motor-assisted bicycle is propelled. forward. When the motor 36 is rotated on the other hand, the rotation of the rotor of the motor 36 is transmitted through the other mechanism in the power unit 34 to the chain 37 . This also rotates the rear wheel 28 . Thus, the electric motor-assisted bicycle is provided with the human power drive system using the human power transmitted through the crankshaft 33 and with the motor drive system using power of the motor 36 .

A casing 41 is attached to the lower portion of the main tube 10 . A controller 42 is disposed in the casing 41 . To the motor 36 is supplied drive current from chargeable batteries 39 . The support structure of the for the batteries 39 will be described later. It is arranged so that the batteries 39 supply current to the motor 36 and the controller 42 regulates the amount of the current.

That is to say, when the human drive power or the pedal force applied through the pedals 31 , cranks 32 , and crankshaft 33 is great, the controller 42 increases the current flowing to the motor 36 and when the pedal force is small, the controller 42 decreases the current flowing to the motor 36 . This makes it possible to increase the drive force of the motor 36 when the load on the rider is great so that the load on the rider is alleviated. Here, as the motor 36 , a permanent magnet DC motor or a DC series motor may be used. As the controller 42 , a chopper type is preferable which changes the on-off time ratio of the DC voltage (duty ratio) according to the torque.

As shown in FIG. 1. the batteries 39 are stowed in two layers in an inner box 38 which in turn is stowed in an outer box 40 . The outer box 40 is disposed between the seat tube 22 and the rear wheel 28 , and secured to a projection 72 formed on the middle lug 44 , to a projection 73 formed on the hanger lug 45 , and to a securing member 74 attached to the seat stay 24 .

The outer box 40 is a generally rectangular box with its top end open for inserting the inner box 38 . The top end of the outer box 40 is provided with a lid 61 . The lid 61 can be freely turned in the directions shown with the arrow (A) in FIG. 1 so that the top end of the outer box 40 may be opened and closed. When the lid 61 is closed, the interior of the outer box 40 is completely sealed to exclude mud, rain water, and dust, and keep the inner box 38 clean.

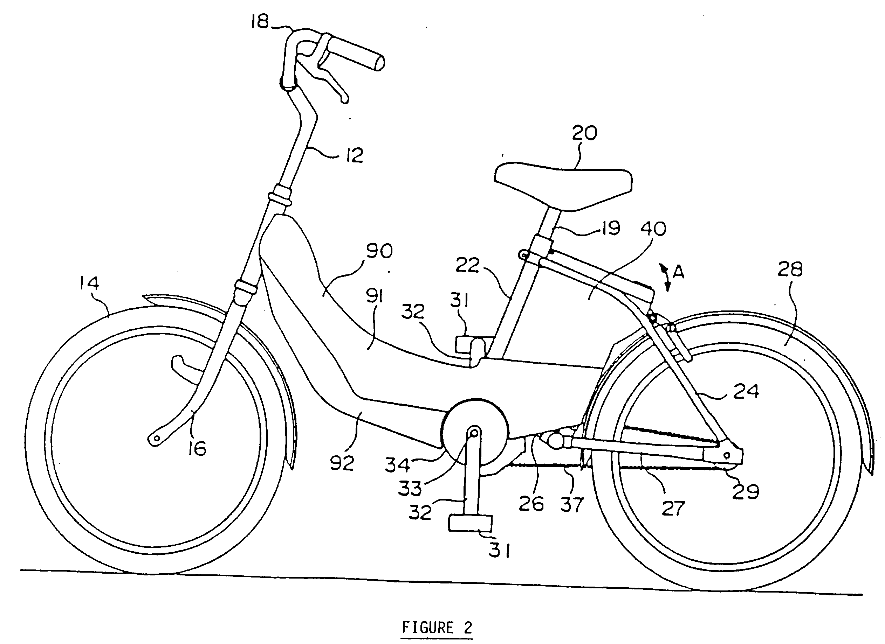

FIG. 2 is a side view of the electric motor-assisted bicycle in completed state. The body of the electric motor-assisted bicycle is provided with a cover (90) for covering the main tube (10) and others. The cover (90) is made up of an upper cover (91) and a lower cover (92), with the former covering the main tube (10), the lower portion of the seat tube (22), the rear tube (26), and the lower portion of the outer box (40) for the batteries (39), and with the latter covering the motor (36) and the casing (41)

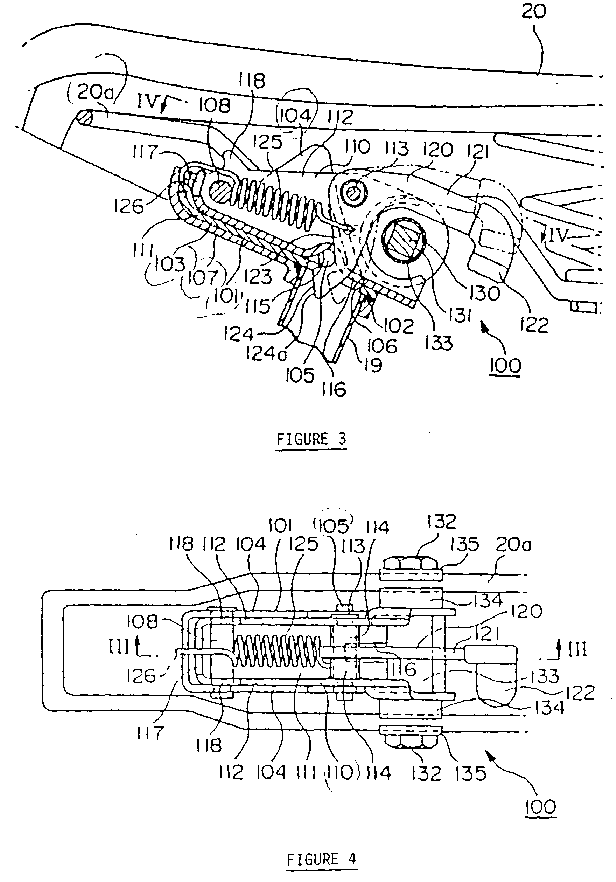

FIG. 3 shows a side cross section of a seat fastening device 100 for a bicycle of this embodiment, as seen along the arrow line III-III in FIG. 4. FIG. 4 shows a cross section as seen along the arrow line IV-IV in FIG. 3. To the top end brim of the seat post 19 is secured by welding a first bracket 101 . The symbol 102 denotes a weld bead. The first bracket 101 has a bottom portion 103 welded to the seat post 19 and a generally triangular side wall 104 bent up from both sides of the bottom portion 103 .

Around the seat post 19 is arranged a plastic cover 107 so as to cover the weld bead 102 . Is a result, the weld bead 102 does not wedge into the top end brim of the seat tube 22 even when the seat post is inserted to the deepest position (See FIG. 1) into the seat tube 22 so that the top end brim of the seat tube 22 is protected against damage and that the seat tube 22 is protected against corrosion resulting from the damage.

An engagement pin 105 is interposed between both side walls 104 . The engagement pin 105 is located at a position slightly above the bottom portion 103 . A hole 106 is formed to communicate with the internal space of the seat post 19 just under the engagement pin 105 .

A second bracket 110 is interposed also between the side walls 104 so as to be turned about a rotary shaft 108 attached to the front ends of the side walls 104 . The second bracket 110 has a bottom portion 111 in contact with the bottom portion 103 of the first bracket 101 and side walls 112 bent up from both sides of the bottom portion 111 . The front end of the bottom portion 111 is formed in an arcuate shape coaxially with the rotary shaft 108 so that the second bracket 110 turn smoothly about the rotary shaft 108 . Projections 118 are formed at the front ends of the side walls 112 . As will be described later, when the second bracket 110 is turned counterclockwise as seen on the drawing, the projections 118 butt against the front end of the bottom portion 103 of the first bracket 101 and serve as turn stoppers.

Each of the side walls 112 is provided with a through hole 130 . A collar 133 for reinforcement is interposed between and welded to both side walls 112 coaxially with the through holes 130 . On the outside of the side walls 112 are disposed conventional toothed lock washers 134 and washers 135 . A toothed bolt 131 is inserted through the toothed lock washers 134 , washers 135 , and collar 133 . Nuts 132 engage with both ends of the toothed bolt 131 . A frame 20a of the seat 20 is clamped with the toothed lock washers 134 and the washers 135 . Thus, the seat 20 is attached to the second bracket 110 so as to be rotatable together with the second bracket 110 about the rotary shaft 108 .

A rotary shaft 113 is interposed between side walls 112 of the second bracket 110 and provided with a generally L-shaped, rotatable lever 120 . A spacer 114 in FIG. 4 is passed though and welded to the lever 120 for positioning the lever 120 in the center of the internal space of the second bracket 110 . At the end of an arm portion 121 of the lever 120 is attached a grip 122 for receiving a force on the lever 120 .

At the end of an arm portion 123 extending below the lever 120 is formed a hook 124 to be an action point of the lever (120). On the bottom portion 111 of the second bracket 110 is formed a slit 116 for the arm portion 123 to pass through so that the hook 124 enters the internal space of the seat post 19 through the hole 106 . The hook 124 is convex toward the front of the vehicle body and normally engaged with the engagement pin 105 . On the bottom portion 111 of the second bracket 110 is also formed with a recess 115 receding from down upward. The recess 115 is semicircular in side view to receive the engagement pin 105 in normal state or in the state of the bottom portion 111 of the second bracket 110 being in contact with the bottom portion 103 of the first bracket 101 .

A tension coil spring 125 is stretched between the arm portion 123 and the front end of the first bracket 101 so as to urge the lever 120 clockwise as seen in FIG. 3. Here, the lever is attached in an attitude so that the lever 120 is turned clockwise also by its own weight. Thus, once the lever 120 is urged clockwise by both the spring and the lever's own weight, the hook 124 does not easily disengage from the engagement pin 105 once the hook 124 engages with the engagement pin 105 . Here, the front end of the bottom portion 103 of the first bracket 101 is bent up for hooking one end of the coil spring 125 and provided with a hole 126 for engagement by hooking. The front end of the bottom portion 111 of the second bracket 110 is formed with a groove 117 to avoid contact with the coil spring 125 .

When the grip 122 of the lever 120 is held by hand and lifted against those urging forces, the lever 120 is turned about the rotary shaft 113 counterclockwise in FIG. 3. That state is shown with phantom lines in FIG. 3. When the hook 124 is released from the engagement pin 105 under that state, the second bracket 110 together with the seat 20 can be turned about the rotary shaft 108 counterclockwise in FIG. 3 or in the direction away from the first bracket 101 .

Next, the function of the fastening device 100 for the bicycle seat of the embodiment will be described. First, the grip 122 of the lever 120 is held by hand and lifted. As a result, the lever 120 is turned against the force of the coil spring 125 and the own weight of the lever 120 about the rotary shaft 113 counterclockwise in FIG. 3. As a result, the hook 124 disengages from the engagement pin 105 . Then, while holding the lever 120 in that position, the second bracket 110 together with the seat 20 is turned about the rotary shaft 108 counterclockwise in FIG. 3 or in the direction away from the first bracket 101 .

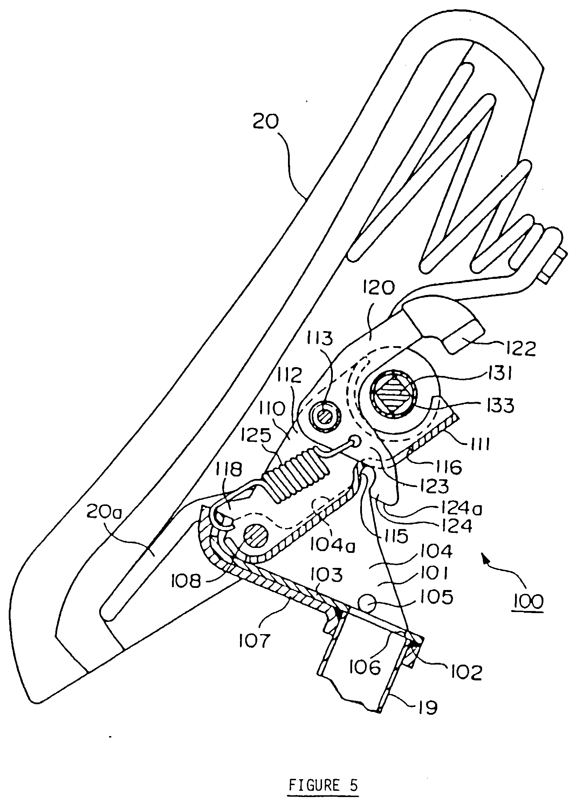

Thus, the seat 20 attached to the second bracket 110 can be easily turned as shown in FIG. 5 to be approximately parallel to the seat post 19 . Here, as described above, the direction of turning the lever 120 for disengaging the hook 124 from the engagement pin 105 is counter-clockwise in FIG. 3. The direction of turning the second bracket 120 away from the first bracket 101 is also counterclockwise. Thus, since the both directions are the same as each other, the operation of disengaging the hook 124 from the engagement pin 105 and the operation of turning the second bracket 110 away from the first bracket 101 are made continuously and smoothly.

In the state shown in FIG. 5, the lever 120 is urged by the coil spring 125 clockwise about the rotary shaft 113 . As a result, the arm portion 123 of the lever 120 comes into contact with the front edge of the slit 116 in the bracket 110 to urge the second bracket 110 counterclockwise. As the projection 118 of the second bracket 110 is in contact with the front edge of the bottom portion 103 of the first bracket 101 , the second bracket 110 and the seat 20 remains still.

Since the second bracket 110 is urged in the direction away from the first bracket 101 by the force of the coil spring 125 urging the hook 124 in the direction of engaging with the engagement pin 105 , the seat 20 turned once away from the first bracket 101 can be held in the position to which it has been turned. This eliminates such inconvenience against the user doing some work around the seat tube 22 as the seat 20 unexpectedly turning toward the first bracket 101 and butting against the user.

In the state of the seat 20 being held in the position to which it has been turned, the user can open the lid 61 of the outer box 40 , take out the inner box 38 from inside the outer box 40 upward, charge the batteries 39 , and insert the inner box 38 holding the batteries which have been charged, into the outer box 40 from above.

As described above, in the state shown in FIG. 5, the seat 20 and the second bracket 110 are in the farthest limit position away from the first bracket 101 . In that state, oblique sides 104a of the side wall 104 of the first bracket 101 are higher than the bottom portion 111 of the second bracket 110 . This eliminates the possibility of the user's hand being inadvertently pinched between the second bracket 110 and the first bracket 101 .

When the seat 20 is turned from the state shown in FIG. 5 clockwise or toward the first bracket 101 and the hook 124 of the lever 120 is made to engage again with the engagement pin 105 , the second bracket 110 is held immovable for the user to sit on. At this time, the oblique sides 124a of the hook 124 first come in contact with the engagement pin 105 and are turned once counterclockwise by the reaction force from the engagement pin 105 and then the hook 124 engages with the engagement pin 105 .

On the other hand, the bottom portion 111 of the second bracket 110 comes into contact with the bottom portion 103 of the first bracket 101 and the engagement pin 105 fits into the recess 115 formed at the bottom portion 111 . Here, since the recess 115 is semicircular, when the engagement pin 105 fits into the recess 115 , the second bracket 110 becomes immovable back and forth on the first bracket 101 . Therefore, the seat 20 is prevented from rattling back and forth. In this embodiment, since the engagement pin 105 spans both side walls 104 , deflection of the engagement pin 105 is smaller than that which would occur when the engagement pin 105 is supported with only one of the side walls 104 like a cantilever.

Furthermore in this embodiment, since the lever 120 is turned by its own weight in the direction of the hook 124 engaging with the engagement pin 105 , once the hook 124 engages with the engagement pin 105 , the hook 124 does not naturally come off the engagement pin 105 . Therefore, the hook 124 remains engaged with the engagement pin 105 even if the coil spring 125 breaks.

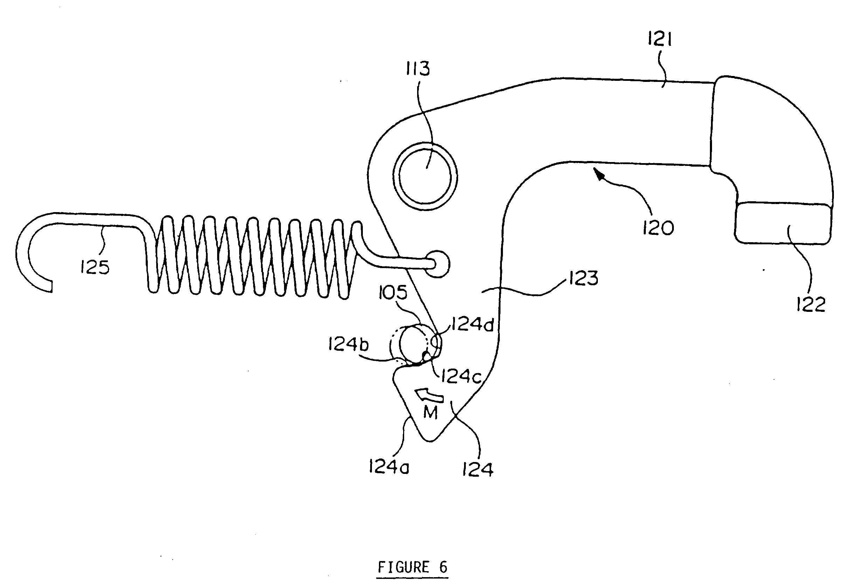

FIG. 6 is an enlarged side view of the lever 120 . In the normal state of the seat 20 being generally horizontal, the hook 124 of the lever 120 has oblique side 124a extending from up left to down right in FIG. 6 and generally horizontal side 124b adjacent to the oblique side 124a . In the normal state, the the horizontal sides 124b are below the engagement pin 105 . The hook 124 further has oblique side 124c adjacent to the horizontal side 124b and extending from down left to up right, and a concave surface 124d continuing from the oblique side 124c .

When the hook 124 is engaged with the engagement pin 105 , the engagement pin 105 is first located on the horizontal side 124b . When the horizontal side 124b comes into contact with the engagement pin 105 , an upward force is applied from the hook 124 to the engagement pin 105 by a moment (M) caused by the tensile force of the coil spring 125 and the hook 124 receives a downward reactional force. As a result, the rotary shaft 113 and the second bracket 110 are pulled downward. As a result, a downward force is applied to the seat 20 attached to the second bracket 110 to prevent the seat 20 from rattling in the vertical direction.

If the engagement pin 105 does not come into contact with the horizontal side 124b because of dimension errors of the lever 120 , for example if the distance between the rotary shaft 113 (FIG. 3) and the horizontal side 124b is shorter than a specified value, the oblique side 124c is made to come into contact with the engagement pin 105 by the moment (M). An upward force is applied to the engagement pin 105 also by the oblique side 124c and a downward reaction force is applied to the hook 124 . Therefore, in this case too, the seat 20 is prevented from rattling in the vertical direction by the downward force working on the seat 20 .

This invention is not limited to the above embodiment but may be modified in various ways as described below.

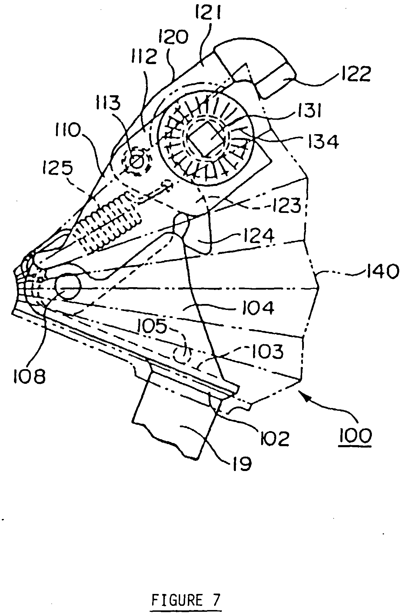

① As shown with phantom lines in FIG. 7, the area from the bottom portion 103 of the first bracket 101 to the side walls 112 of the second bracket 110 may be covered with an elastic bellows cover (closure means) 140 . The cover 140 surrounds the seat post 19 and, like the cover 107 described before, covers the weld bead 102 and has the function of preventing the weld bead 102 from wedging into the top brim of the seat tube 22 even when the seat post 19 is inserted to the deepest position into the seat tube 22 .

The cover 140 closes the space between the side walls 104 of the first bracket 101 and the side walls 112 of the second bracket 110 . Therefore, the user cannot put his or her hand between the second bracket 110 and the first bracket 101 and his or her hand is reliably protected against being pinched by mistake. Since the cover 140 is made in the shape of bellows, it can be extended or contracted, and does not hinder the turning operation of the second bracket 110 .

② While the above embodiment is applied to an electric motor-assisted bicycle, this invention may be applied to ordinary bicycles. For example, this invention is convenient when components requiring frequent service or replacement are arranged near the seat post.

③ While the seat is tilted from the horizontal state forward of the vehicle body in the above embodiment, the seat may also be tilted backward depending on the arrangement of components around the seat post.

With this invention as described above, the second bracket and the seat attached to it can be easily turned in the direction away from the first bracket by turning the lever and disengaging the hook of the lever from the engagement pin. Furthermore, once the second bracket is turned toward the first bracket again, not only the hook of the lever engages with the engagement pin but also the engagement pin fits into the recess formed on the second bracket so that the second bracket is immovable relative to the first bracket. As a result, the seat is prevented from rattling in the back and forth directions.

## Claims

1. A seat fastening device (100) for bicycles, in particular power-assisted bicycles, comprising a first bracket (101) fastened to a seat post (19) of said bicycle, a second bracket (110) pivotably linked to said first bracket (101) and supporting a seat (20) of said bicycle and by means (120, 105) releasably connecting said first and second brackets (101, 110), **characterized in that** said first bracket (101) comprises a bottom portion (103) fixed to said seat post (19) and two side walls (104) extending from said bottom portion (103) to said seat (20), an engagement pin (105) arranged between both side walls (104) adjacent said bottom portion (103) or an engagement hole is provided on said first bracket (101) and that said second bracket (110) is attached with respect to the driving direction to one terminal end of said side walls (104) by a rotary shaft (108).

2. A seat fastening device according to claim 1, **characterized in that** said means comprise a lever (120) provided with a hook (124) pivotably linked to said second bracket (110) and said engagement pin (105) or hole provided on said first bracket (101).

3. A seat fastening device according to claim 2, **characterized in that** said lever (120) is arranged and constructed such that it is capable of engaging said engagement pin (105) by a rotary movement effectable by the weight of said lever (120).

4. A seat fastening device according to claim 3, **characterized in that** said rotary movement is further effectable by a coil spring (125) fastened between said first bracket (101) and said lever (120).

5. A seat fastening device according to claim 4, **characterized in that** said lever (120) is generally L-shaped and pivotably fastened to said second bracket (110) by a rotary shaft (113) protruding through a knee of said lever (120) and that said lever (120) further comprises a first arm portion (121) substantially extending in longitudinal direction of said seat (20), whereby the free end of said first arm portion (121) being provided with a grip (122), and a second arm portion (123) transversely extending to said first arm portion (121) opposite said seat (20), whereby the free end of said second arm portion (123) being provided with said hook (124).

6. A seat fastening device according to one of the preceding claims 2 to 5, **characterized in that** the sense of rotation for releasing said hook (124) and said engagement pin (105) corresponds to the sense of rotation of said second bracket (110) with respect to said first bracket (101) when said hook (124) and said engagement pin (105) are disengaged.

7. A seat fastening device according to claim 5 or 6, **characterized in that** said hook (124) comprises a first generally oblique side (124a) opposite to said second arm portion (123) of said lever (120) followed by a generally horizontal side (124b) terminating to a second generally oblique side (124c) and a concave side (124d) for receiving said engagement pin (105).

8. A seat fastening device according to one of the preceding claims 1 to 7, **characterized in that** said second bracket (110) comprises a bottom portion (111), one terminal end of which being formed in an arcuate shape coaxially with said rotary shaft (108) and two side walls (112) extending from said bottom portion (11) to said seat (20).

9. A seat fastening device according to claim 8, **characterized in that** said bottom portion (111) of said second bracket (110) comprises a recess (115) for receiving said engagement pin (105) when said seat (20) is in the fastened position.

10. A seat fastening device according to claim 8 or 9, **characterized by** projections (118) formed at terminal ends of said side walls (112) adjacent said rotary shaft (108) of said second bracket (110) for limiting the rotary movement of said second bracket (110) with respect to said first bracket (101).

11. A seat fastening device according to one of the preceding claims 1 to 10, **characterized in that** said rotary shaft (108) is provided at the front terminal ends or at the rear terminal ends of said side walls (104).

12. A seat fastening device according to one of claims 4 to 11, **characterized in that** said second bracket (110) is maintainable in an opened position, when said hook (124) and said engagement pin (105) are disengaged, by the force applied by said coil spring (125).

13. A seat fastening device according to one of claims 8 to 12, **characterized in that** the second arm portion (123) of said lever (120) extending through a slit (116) provided in the bottom portion (111) of said second bracket (110) so that said hook (124) is arranged within an internal space of the seat post (19) when said seat (20) is in the fastened position.

14. A seat fastening device according to one of the preceding claims 1 to 13, **characterized in that** the heights of said side walls (104) are such that portions of which are always adjacent said side walls (112) of said second bracket (110) regardless of the position of said second bracket (110) with respect to said first bracket (101).

15. A seat fastening device according to one of claims 1 to 14, **characterized in that** the surface of the bottom portion (103) of said first bracket (101) opposite to said seat (20) is provided with a cover (107), for example made of plastic.

16. A seat fastening device according to one of claims 1 to 15, **characterized by** a cover means (140) provided between said first bracket (101) and said second bracket (110), whereby said cover means (140) is expandable and contractible respectively, by moving said second bracket (110) with respect to said first bracket (101).

17. A seat fastening device according to claim 16, **characterized in that** said cover means (140) in addition covers an outer surface of a bottom portion (103) of said first bracket (101).

18. A seat fastening device according to one of claims 1 to 17, **characterized in that** said bicycle is an electric motor-assisted bicycle comprising a cover (90) over a main tube (10), said cover comprising an upper cover (91) and a lower cover (92), said upper cover (91) covering said main tube (10), a lower portion of a seat tube (22) and a lower portion of an outer box (40) in which at least one battery (39) carrying inner box (38) is insertable, while the lower cover (92) covers an electric motor (36) and a casing (41) of a controller (42), whereby said outer box (40) is fastened in front of said seat tube (22) or between said seat tube (22) and a rear wheel (28) of said bicycle and is provided with a lid (61) at its top end.

## Patentansprüche

1. Eine Sitzbefestigungseinrichtung (100) für Fahrräder, insbesondere für hilfskraftangetriebene Fahrräder, mit einem ersten Halter (101), der an einem Sitzpfosten (19) von diesem Fahrrad befestigt ist, einem zweiten Halter (110), der verschwenkbar an diesem ersten Halter (101) angeschlossen ist und einen Sitz (20) von diesem Fahrrad mit Einrichtungen (120, 105) trägt, die diese ersten und zweiten Halter (101, 110) lösbar miteinander verbinden, **dadurch gekennzeichnet**, daß der erste Halter (101) einen Bodenabschnitt (100) aufweist, der an diesem Sitzpfosten (19) angeschlossen ist, sowie zwei Seitenwandungen (104) enthält, die sich von diesem Bodenabschnitt (103) zu dem Sitz (20) erstrecken, einen Eingriffsstift (105) enthält, der zwischen beiden Seitenwandungen (104) angrenzend an diesem Bodenabschnitt (103) angeordnet ist, oder ein Eingriffsloch aufweist, welches in dem ersten Halter (101) angeordnet ist, und daß dieser zweite Halter (110) bezüglich der Fahrtrichtung an einem Endabschnitt von diesen Seitenwandungen (104) mittels einer Drehwelle (108) angeschlossen ist.

2. Eine Sitzbefestigungseinrichtung nach Anspruch 1, **dadurch gekennzeichnet,** daß diese Einrichtungen einen Hebel (120) enthalten, der an einem Haken (124) aufweist und verschwenkbar an diesem zweiten Halter (110) befestigt ist, und wobei dieser Eingriffsstift (105) oder dieses Loch an diesem ersten Halter (101) angeordnet sind.

3. Eine Sitzbefestigungseinrichtung nach Anspruch 2, **dadurch gekennzeichnet,** daß der Hebel (120) derart angeordnet und konstruiert ist, daß er in der Lage ist, mittels einer Drehbewegung, die von dem Gewicht des Hebels (120) bewirkt wird, mit diesem Eingriffsstift (105) in Eingriff zu gelangen.

4. Eine Sitzbefestigungseinrichtung nach Anspruch 3, **dadurch gekennzeichnet**, daß diese Drehbewegung des weiteren von einer Schraubenfeder (115) bewirkbar ist, die zwischen diesen ersten Haltern (101) und diesem Hebel (120) befestigt ist.

5. Eine Sitzbefestigungseinrichtung nach Anspruch 4, **dadurch gekennzeichnet**, daß dieser Hebel allgemein L-förmig ausgebildet und verschwenkbar an diesem zweiten Halter (110) mittels einer Drehwelle (113) befestigt ist, die sich durch ein Knie von diesem Hebel (120) hindurch erstreckt, und daß dieser Hebel (120) des weiteren einen ersten Armabschnitt (121) aufweist, der sich im wesentlichen in longitudinaler Richtung von diesem Sitz (20) erstreckt, wobei das freie Ende von diesem ersten Armabschnitt (121) mit einem Griff (122) versehen ist, und daß sich ein zweiter Armabschnitt (123) transversal zu diesem ersten Armabschnitt (121) entgegengesetzt von diesem Sitz (20) erstreckt, wobei das freie Ende von diesem zweiten Armabschnitt (123) mit diesem Haken (124) versehen ist.

6. Eine Sitzbefestigungseinrichtung nach einem der vorstehenden Ansprüche 2 bis 5, **dadurch gekennzeichnet**, daß der Drehsinn zur Freigabe dieses Hakens (124) und dieses Eingriffstiftes (105) dem Drehsinn von diesem zweiten Halter (110) bezüglich zu diesem ersten Halter (110) entspricht, wenn dieser Haken (124) und dieser Eingriffsstift (105) freigegeben sind.

7. Eine Sitzbefestigungseinrichtung nach Anspruch 5 oder 6, **dadurch gekennzeichnet**, daß dieser Haken (124) eine erste allgemein schräge Seite (124a) entgegengesetzt von diesem zweiten Armabschnitt (123) für diesen Hebel (120) aufweist, die gefolgt wird von einer allgemein horizontalen Seite (124b), die an einer zweiten allgemein schrägen Seite (124c) endet, und mit einer konkaven Seite (124d) zur Aufnahme von diesem Eingriffsstift (105) versehen ist.

8. Eine Sitzbefestigungseinrichtung nach einem der vorstehenden Ansprüche 1 bis 7, **dadurch gekennzeichnet**, daß der zweite Halter (110) einen Bodenabschnitt (111) aufweist, von dem ein Endabschnitt in einer gebogenen Form koaxial mit dieser Drehwelle (108) ausgebildet ist, und wobei zwei Seitenwandungen (112) sich von diesem Bodenabschnitt (11) zu dem Sitz (20) erstrecken.

9. Eine Sitzbefestigungseinrichtung nach Anspruch 8, **dadurch gekennzeichnet,** daß dieser Bodenabschnitt (111) von diesem zweiten Halter (110) eine Aussparung (115) aufweist zum Aufnehmen dieses Eingriffsstiftes (105), wenn sich der Sitz (20) in seiner befestigten Position befindet.

10. Eine Sitzbefestigungseinrichtung nach Anspruch 8 oder 9, **gekennzeichnet durch** Vorsprünge (118), die an den Endabschnitten von diesen Seitenwandungen (112) angrenzend an dieser Drehwelle (108) von diesem zweiten Halter (110) angeordnet sind zum Einschränken der Drehbewegung des zweiten Halters (110) bezüglich des ersten Halters (101).

11. Eine Sitzbefestigungseinrichtung nach einem der vorstehenden Ansprüche 1 bis 10, **dadurch gekennzeichnet,** daß diese Drehwelle (108) an den vorderen Endabschnitten oder an den rückwärtigen Endabschnitten von diesen Seitenwandungen (104) angeordnet ist.

12. Eine Sitzbefestigungseinrichtung nach einem der vorstehenden Ansprüche 4 bis 11, **dadurch gekennzeichnet**, daß dieser zweite Halter (110) in der geöffnenten Position haltbar ist, wenn dieser Haken (124) und dieser Eingriffsstift (105) voneinander getrennt sind, und zwar mittels der von der Schraubenfeder (125) aufgebrachten Kraft.

13. Eine Sitzbefestigungseinrichtung nach einem der vorstehenden Ansprüche 8 bis 12, **dadurch gekennzeichnet,** daß der zweite Armabschnitt (123) von diesem Hebel (120) sich durch einen Schlitz (116) hindurch erstreckt, der in dem Bodenabschnitt (111) von dem zweiten Halter (110) derart angeordnet ist, daß dieser Haken (124) innerhalb eines inneren Raumes von diesem Sitzpfosten (19) angeordnet ist, wenn sich dieser Sitz (20) in seiner befestigten Position befindet.

14. Eine Sitzbefestigungseinrichtung nach einem der vorstehenden Ansprüche 1 bis 13, **dadurch gekennzeichnet**, daß die Höhen von diesen Seitenwandungen (104) derart ausgebildet sind, daß Abschnitte davon immer angrenzend an diese Seitenwandungen (112) von diesem zweiten Halter (110) sich befinden, und zwar unabhängig von der Position des zweiten Halters (110) bezüglich des ersten Halters (101).

15. Eine Sitzbefestigungseinrichtung nach einem der vorstehenden Ansprüche 1 bis 14, **dadurch gekennzeichnet**, daß die Oberfläche des Bodenabschnittes (103) von diesem ersten Halter (101), die sich entgegengesetzt zu diesem Sitz (20) befindet, mit einem Deckel (107) versehen ist, der z.B. aus Kunststoff hergestellt ist.

16. Eine Sitzbefestigungseinrichtung nach einem der vorstehenden Ansprüche 1 bis 15, **gekennzeichnet durch** eine Abdeckungseinrichtung (114), die zwischen diesem ersten Halter (101) und diesem zweiten Halter (110) angeordnet ist, wobei diese Abdeckungseinrichtung (140) expandierbar bzw. zusammendrückbar ist durch die Bewegung des zweiten Halters (110) bezüglich des ersten Halters (101).

17. Eine Sitzbefestigungseinrichtung nach Anspruch 16, **dadurch gekennzeichnet**, daß die Abdeckungseinrichtung (140) zusätzlich eine äußere Oberfläche von einem Bodenabschnitt (103) von diesem ersten Halter (101) abdeckt.

18. Eine Sitzbefestigungseinrichtung nach einem der Ansprüche 1 bis 17, **dadurch gekennzeichnet**, daß dieses Fahrrad ein mittels eines Elektromotors unterstütztes Fahrrad ist, mit einer Abdeckung (90), die um eine Hauptröhre (10) angeordnet ist, wobei diese Abdeckung einen oberen Deckel (91) und einen unteren Deckel (92) aufweist, wobei dieser obere Deckel (91) diese Hauptröhre (10), einen unteren Abschnitt von einer Sitzröhre (22) und einen unteren Abschnitt von einem äußeren Kasten (40) abdeckt, in welchem zumindest eine, eine Batterie (39) tragende innere Boxen (38) einführbar ist, während der obere Deckel (92) einen Elektromotor (36) und ein Gehäuse (41) für eine Steuereinrichtung (42) abdeckt, wobei der äußere Kasten (40) vor der Sitzröhre (22) oder zwischen dieser Sitzröhre (22) und einem Hinterrad (28) von diesem Fahrrad angeordnet und an seinem oberen Ende mit einem Deckel (61) versehen ist.

## Revendications

1. Un dispositif de fixation de selle (100) pour bicyclette, en particulier bicyclette à moteur auxiliaire, comprenant un premier support (101) fixé à un pilier à selle (19) de ladite bicyclette, un deuxième support (110) relié à pivotement audit premier support (101) et supportant un selle (20) de ladite bicyclette et par des moyens (120, 105) reliant de façon désolidarisable lesdits premier et deuxième supports (101, 110), caractérisé en ce que ledit premier support (101) comprend une partie inférieure (103) fixée audit pilier à selle (19) et deux parois latérales (104) s'étendant depuis ladite partie inférieure (103) à ladite selle (20), une tige de mise en prise (105), placée entre les deux parois latérales (104) adjacentes à ladite partie inférieure (103), ou un trou de mise en prise, est prévu sur ledit premier support (101) et en ce que ledit support (110) est fixé par rapport à la direction d'entraînement d'une extrémité terminale de ladite paroi latérale (104), à l'aide d'un arbre rotatif (108).

2. Un dispositif de fixation pour selle selon la revendication 1, caractérisé en ce que lesdits moyens comprennent un levier (120) doté d'un crochet (124) relié de façon pivotante audit deuxième support (110) et à ladite tige de mise en prise (105) ou le trou prévu sur ledit premier support (101).

3. Un dispositif de fixation pour selle selon la revendication 2, caractérisé en ce que ledit levier (120) est agencé et construit de manière à être en mesure d'être mis en prise avec ladite tige de mise en prise (105), par un mouvement rotatif pouvant être effectué sous l'effet du poids dudit levier (120).

4. Un dispositif de fixation pour selle selon la revendication 3, caractérisé en ce que ledit déplacement rotatif est en outre susceptible d'être effectué par un ressort hélicoïdal (125), fixé entre ledit premier support (101) et ledit levier (120).

5. Un dispositif de fixation pour selle selon la revendication 4, caractérisé en ce que ledit levier (120) a une forme globale en L et est fixé de façon pivotante sur ledit deuxième support (110), par un arbre rotatif (113) faisant saillie, par un coude, dudit levier (120), et ledit levier (120) comprenant en outre une première partie de bras (121) s'étendant sensiblement en direction longitudinale dudit selle (20), de manière que l'extrémité libre de ladite première partie de bras (121) soit dotée d'une poignée (122), et une deuxième partie de bras (123) s'étendant transversalement par rapport à ladite première partie de bras (121), à l'opposé dudit selle (20), de manière que l'extrémité libre de ladite deuxième partie de bras (123) soit dotée dudit crochet (124).

6. Un dispositif de fixation pour selle selon l'une des revendications 2 à 5 précédentes, caractérisé en ce que le sens de rotation, pour libérer ledit crochet (124) et ladite tige de mise en prise (105), correspond au sens de rotation dudit deuxième support (110) par rapport audit premier support (101), lorsque ledit crochet (124) et ladite tige de mise en prise (105) sont mis hors de prise.

7. Un dispositif de fixation pour selle selon la revendication 5 ou 6, caractérisé en ce que ledit crochet (124) comprend une première face (124a) globalement oblique, opposée à ladite deuxième partie de bras (123) dudit levier (120), suivie par une face (124b) globalement horizontale s'achevant en une deuxième face (124c) globalement oblique et une face concave (124d), pour recevoir ladite tige de mise en prise (105).

8. Un dispositif de fixation pour selle selon l'une des revendications 1 à 7 précédentes, caractérisé en ce que ledit deuxième support (110) comprend une partie inférieure (111), dont une extrémité terminale est formée selon un tracé arqué, coaxialement audit arbre rotatif (108), et deux parois latérales (112) qui s'étendent depuis ladite partie inférieure (11) vers ladite selle (20).

9. Un dispositif de fixation pour selle selon la revendication 8, caractérisé en ce que ladite partie inférieure (111) dudit deuxième support (110) comprend une cavité (115) pour recevoir ladite tige de mise en prise (105) lorsque ladite selle (20) est en position fixée.

10. Un dispositif de fixation pour selle selon la revendication 8 ou 9, caractérisé par des saillies (118) formées à des extrémités terminales desdites parois latérales (112) adjacentes audit arbre rotatif (108) dudit deuxième support (110), afin de limiter le mouvement rotatif dudit deuxième support (110) par rapport audit premier support (101).

11. Un dispositif de fixation pour selle selon l'une des revendications 1 à 10 précédentes, caractérisé en ce que ledit arbre rotatif (108) est prévu aux extrémités terminales avant ou aux extrémités terminales arrière desdites parois latérales (104).

12. Un dispositif de fixation pour selle selon l'une des revendications 4 à 11 précédentes, caractérisé en ce que ledit deuxième support (110) est susceptible d'être maintenu en position ouverte, lorsque ledit crochet (124) et ladite tige de mise en prise (105) sont désolidarisés, par la force appliquée par ledit ressort hélicoïdal (125).

13. Un dispositif de fixation pour selle selon l'une des revendications 8 à 12, caractérisé en ce que la deuxième partie de bras (123) dudit levier (120) s'étend à travers une fente (116) ménagée dans la partie inférieure (111) dudit deuxième support (110), de manière que ledit crochet (124) soit agencé à l'intérieur d'un espace interne du pilier pour selle (19), lorsque ladite selle (20) est à la position fixée.

14. Un dispositif de fixation pour selle selon l'une des revendications 1 à 13 précédentes, caractérisé en ce que les hauteurs desdites parois latérales (104) sont telles que des parties de celles-ci sont toujours adjacentes auxdites parois latérales (112) dudit deuxième support (110), indépendamment de la position dudit deuxième support (110) par rapport audit premier support (101).

15. Un dispositif de fixation pour selle selon l'une des revendications 1 à 14, caractérisé en ce que la surface de la partie inférieure (103) dudit premier support (101) opposée à ladite selle (20) est dotée d'un couvercle (107), par exemple en matière plastique.

16. Un dispositif de fixation pour selle selon l'une des revendications 1 à 15, caractérisé par des moyens formant couvercle (140) prévus entre ledit premier support (101) et ledit deuxième support (110), de manière que lesdits moyens formant couvercle (140) puissent être déployés et contractés, respectivement, par déplacement dudit deuxième support (110) par rapport audit premier support (101).

17. Un dispositif de fixation pour selle selon la revendication 16, caractérisé en ce que lesdits moyens formant couvercle (140), en plus couvrent une surface extérieure d'une partie inférieure (103) dudit premier support (101).

18. Un dispositif de fixation pour selle selon l'une des revendications 1 à 17, caractérisé en ce que ladite bicyclette est une bicyclette à moteur auxiliaire électrique comprenant un couvercle (90) sur un tube principal (10), ledit couvercle comprenant un couvercle supérieur (91) et un couvercle inférieur (92), ledit couvercle supérieur (91) couvrant ledit tube principal (10), une partie inférieure d'un tube de selle (22) et une partie inférieure d'un boîtier extérieur (40) dans lequel au moins une batterie (39), portant un boîtier intérieur (38), est insérable, tandis que le couvercle inférieur (92) couvre un moteur électrique (36) et un boîtier (41) d'un contrôleur (42), de manière que ledit boîtier extérieur (40) soit fixé à l'avant dudit tube pour selle (22), ou entre ledit tube pour selle (22) et une roue arrière (28) de ladite bicyclette, et soit doté d'un couvercle (61) à son extrémité supérieure.
